# EUROPEAN PATENT APPLICATION

(11) **EP 4 269 499 A1**
(43) Date of publication of application: **01.11.2023**
(21) Application number: 22815469.6
(22) Date of filing: 02.06.2022
(51) Int. Cl.: C08L 23/12, C08L 55/02, C08L 77/02, C08L 77/06, C08L 97/02

(54) **COMPOSITE PLASTIC COMPRISING PLANT FIBER, AND PREPARATION METHOD THEREFOR AND USE THEREOF**

(30) Priority: 04.06.2021 CN 202110626044
(71) Applicant: King's Flair Development Ltd., Hong Kong (HK)
(72) Inventor: WONG, Siu Wah, Hong Kong (CN); ZHANG, Tommy, Hong Kong (CN)
(74) Representative: Ullrich & Naumann PartG mbB
(86) International application number: PCT/IB2022/055153
(87) International publication number: WO 2022/254370

(57) **Abstract**

The present disclosure provides a method for preparing plastic composites containing a plant fiber. The method includes providing a first raw material containing the plant fiber and a second raw material containing plastics; pretreating the first raw material; heating the pretreated first raw material for carbonization; and mixing the carbonized first raw material with the second raw material to form a composite material. The first raw material may be coffee grounds, and the pretreatment of coffee grounds includes: washing the first raw material with water to remove contaminants and water-soluble compounds, drying the washed first raw material, extracting the oily substance from the dried first raw material using a solvent, obtaining the extracted oily substance from the first raw material; and completely removing the solvent from the extracted first raw material. The plastic composites having coffee grounds prepared in accordance with the method of the present disclosure has improved mechanical properties, tensile properties and thermal stability, and has a wider range of applications.

## Description

### FIELD OF THE DISCLOSURE

The present disclosure is related to plastic composites made from waste materials containing plant fibers and plastics, and more specifically to the plastic composites made from plant fiber wastes that are suitable for use in food-grade utensils, as well as their preparation methods and applications.

### BACKGROUND OF THE DISCLOSURE

It is well known that plastics, as a type of petrochemical products, take hundreds of years to degrade into harmless substances for the environment and the biological chain. The challenges of recycling and degradation of plastic waste are increasing. In order to address the issue of plastic pollution, many researchers are exploring the possibility of synthesizing plastic composites by combining plant fibers with plastics to reduce plastic usage.

On the other hand, a large amount of agricultural wastes (such as shells, bagasse, corn stalks, sawdust, coffee grounds, and etc.) is discarded, and in view of environment considerations, alternative methods for disposing the agricultural wastes need to be explored. The agricultural wastes are rich in plant fibers, which can be developed into sustainable materials through reuse. This approach allows for the production of products at lower costs and contributes to the environment by fully utilizing waste materials.

Currently, coffee grounds are widely used. As one of the most popular beverages, the production of coffee beverages generates a large amount of byproduct, namely coffee grounds. Existing methods for dealing with coffee grounds include incineration or direct disposal as solid waste in landfills, but these methods are not desirable as they are highly detrimental to the environment. Therefore, there is a need to explore the potential applications of coffee grounds as a biological resource. One of these applications is to combine coffee grounds with plastics to form plastic composites.

Coffee grounds are composed of a large amount of organic compounds, including cellulose, hemicellulose, lignin, and proteins. Coffee grounds also contain a significant amount of oil (collectively referred to as coffee oil), which is mainly composed of fatty acids and caffeine. Depending on the type of coffee, coffee oil typically accounts for 7-15 wt.% (weight percentage) of the coffee grounds. Due to the presence of cellulose, hemicellulose, lignin, and other plant fibers, coffee grounds are an ideal natural filler material for forming green materials in polymer composites. However, the presence of coffee oil leads to adhesion and aggregation of coffee ground particles, which can affect the dispersion, mechanical properties, tensile strength, and flexural strength of the composite materials. One of the challenges in preparing plastic composites containing coffee grounds in existing technology is the pretreatment of coffee grounds, which is not only costly but also difficult to remove coffee oil. Therefore, the proportion of coffee grounds used in the preparation of plastic composites is currently low, with coffee grounds typically accounting for less than 5% by weight of the plastic composites.

In view of the above, the present disclosure aims to overcome the limitations of the conventional art by increasing the proportion of coffee grounds in the plastic composites, and form plastic composites with improved mechanical strength, tensile strength, and flexural strength, thereby making full use of waste coffee grounds and contributing to the goal of sustainable development.

### SUMMARY OF THE DISCLOSURE

It is therefore an object of the present disclosure to provide a method for preparing plastic composites containing coffee grounds. In this method, the coffee grounds are thoroughly pre-processed before the compounding and pelletizing step, thereby increasing the amount of coffee grounds added to the plastics, reducing the use of plastics, and achieving the beneficial effects of reducing plastic pollution and minimizing coffee grounds waste.

In one aspect of the present disclosure, a method for preparing plastic composites containing plant fibers is provided to include: (a) providing a first feedstock containing plant fibers and a second feedstock containing plastics; (b) pretreating the first feedstock, the pretreatment comprising (b1) washing the first raw material with water to remove contaminants as well as water soluble compounds, (b2) drying the washed first feedstock, (b3) extracting an oily substance from the dried first raw material by a solvent extraction method to obtain the oily substance extracted first raw material, and (b4) removing the solvent from the extracted first raw material; (c) heating the pretreated first raw material for carbonization; and (d) mixing the carbonized first raw material with the second raw material to form a composite material.

According to the present disclosure, the first raw material contains plant fibers that can be selected from coffee grounds or agricultural wastes such as coffee husks, fruit shells, bagasse, corn stalks, wood chips, and etc.

According to an exemplary embodiment of the present disclosure, the first raw material contains discarded coffee grounds, and the pretreatment of the first raw material includes: washing the first raw material containing coffee grounds with deionized water at room temperature to remove contaminants and water-soluble compounds contained therein; drying the washed first raw material until the moisture content of the coffee grounds is not greater than 20 wt.%, preferably not greater than 10 wt.%; extracting coffee oil from the dried coffee grounds using an organic extraction solvent; and removing the extraction solvent from the coffee grounds. The extraction solvent has oil-extracting properties and can be removed after heating. Preferred extraction solvents include hexane, heptane, tetrahydrofuran, acetone, ether, and anhydrous ethanol, with hexane as more preferred and n-hexane as most preferred.

Advantageously, the steps of extracting coffee oil are carried out at a reflux temperature. Prior to performing the extraction step, the dried coffee grounds are milled or ground to a particle size in the order of microns, preferably not exceeding 250 micrometers, and more preferably ranging from 100 to 150 micrometers.

The steps for removing the extracting solvent from coffee grounds include separating the solid and liquid phases by filtration, and then removing the extracting solvent and residual moisture from the coffee grounds through rotary evaporation or centrifugation at a temperature of 90°C to 110°C, such that the coffee grounds are substantially free of extraction solvent and have a water content of no more than 3 wt.%.

After removing the extracted solvent from coffee grounds, the coffee grounds are heated at a heating rate of 5-10°C/min, preferably to be 5°C/min, ranging from 90°C to 110°C, directly heated to 200°C to 320°C, with a preferred range of 240°C to 300°C. This temperature is maintained for 2 to 4 hours to perform carbonization on the coffee grounds.

In certain circumstances, the first raw material containing coffee grounds can be composed entirely of coffee grounds, or it can be a mixture composed of coffee grounds and other plant fibers. The other plant fibers can be, for example, coffee husks or other fruit peels, wood fibers such as sawdust.

According to the present disclosure, the weight mixing ratio range of coffee grounds and plastics is from 1:2 to 1:20, preferably from 1:2 to 1:5, and more preferably from 1:2.5 to 1:5. The plastics are selected from the group consisting of polypropylene, ABS plastic, nylon, and any combination thereof.

Preferably, an additive is added in step d of the present disclosure method to improve the physical and/or chemical properties of the composite material. In the exemplary embodiment, the additive is a binder that functions to increase viscosity during the mixing process of the first and second raw materials, and maintains the desired tensile strength of the composite material.

A second aspect of the present disclosure provides plastic composites which are prepared by a preparation method according to the present disclosure. The plastic composites can include: 5-50 wt.% plant fibers and 50-95% plastics, wherein the particle size of the plant fibers is in the micron range, preferably not exceeding 250 microns, more preferably in the range of 100 microns to 150 microns. In the exemplary embodiment of the present disclosure, the plastic composites can comprise 5-50 wt.%, preferably 20-40 wt.%, of raw materials containing coffee grounds, and 50-95 wt.%, preferably 60-80 wt.%, of plastic, wherein the particle size of the coffee grounds is in the range of 100 microns to 150 microns. In some cases, a binder may be added to the plastic composites, wherein the binder accounts for about 2-10 wt.%, the raw materials containing coffee grounds accounts for about 5-40 wt.%, and the plastics account for about 50-93%.

A third aspect of the present disclosure relates to the use of plastic composites that contains plant fibers in the production of food-grade utensils. The food-grade utensils may include tableware, straws, food containers and etc.

A focus of the present disclosure is the pretreatment of coffee grounds. Specifically, the washed coffee grounds are first dried to a moisture content of less than 10 wt.%, and then milled or ground to a particle size ranging from 100 micrometers to 150 micrometers. Next, a solvent extraction method is used to completely extract the coffee oil from the coffee grounds. After the oil extraction, the surface morphology of the coffee grounds becomes rougher, providing more pores, which promotes better dispersion of the coffee grounds as a filler in the plastic as a matrix and increases the content of coffee grounds in the plastic composites. The coffee grounds are uniformly mixed with the plastics using a binder, and after blending and pelletizing, plastic composites are formed. Furthermore, conventional plastic processing and molding techniques can be used to manufacture various utensils, including tableware and straws, using the plastic composites containing coffee grounds according to the present disclosure.

### BRIEF DESCRIPTION OF THE DRAWINGS

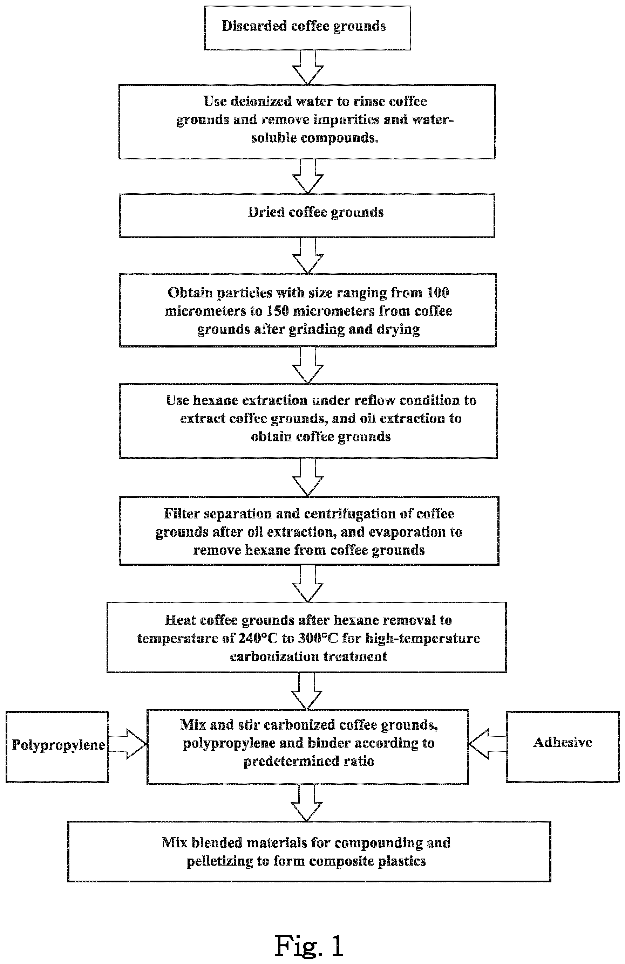

Fig. 1 is a schematic flowchart illustrating a method for preparing plastic composites containing coffee grounds according to a preferred embodiment of the present disclosure.

### DETAILED DESCRIPTION OF THE EXEMPLARY EMBODIMENT

Although the exemplary embodiment is described and disclosed in the present disclosure, the plastic composites and their preparation method can be manufactured in many different configurations, sizes and materials.

For convenience, the specific process of the present disclosure is detailed herein using coffee grounds as an example of waste plant fibers. It should be understood that any other similar plant fiber can also be applied to the method of the present disclosure to make the corresponding plastic composites.

Fig. 1 illustrates a preferred embodiment of a preparation method according to the present disclosure for preparing the plastic composites containing coffee grounds. As shown in Fig. 1, the waste coffee grounds are first recycled, and the coffee grounds material can come from a chain coffee shop or any other source. The raw material used here consists entirely of coffee grounds, or a mixture of coffee grounds mixed with other plant fibers may be used. Other plant fibers can be, for example, coffee husks and wood fibers.

First, the coffee grounds are washed with room temperature deionized water to achieve a neutral pH and to remove any contaminants as well as water soluble compounds. The washed coffee grounds are then dried at 90-110°C until the moisture content is ≤10%. The dried coffee grounds are crushed and milled to obtain coffee grounds particles with a particle size of about 100 to 150 microns. The milling and grinding process can be carried out using conventional art known in the field, such as mechanical grinding with a mixer followed by airflow grinding to the desired particle size.

The crushed coffee grounds particles are extracted with extraction solvent to extract coffee oil. Coffee oil contains mainly fatty acids, which are non-polar compounds due to their long hydrocarbon chains. Therefore, non-polar solvents are usually better than polar solvents in extracting coffee oil. Nonpolar solvents with low or no charge are better able to penetrate into the less polar matrix of the coffee grounds and extract more fatty acids. The use of hexane, which has low polarity, is preferred. In addition, hexane has a low boiling point, high solubility for most oils and fats, low toxicity, and no odor, making it ideal for use as the extraction solvent in the present disclosure. The low boiling point of hexane makes subsequent solvent removal steps simple and convenient, as hexane can be easily evaporated at low temperatures. Hexane is odorless and does not affect the final composite. More advantageously, hexane can naturally draw out the oil without affecting the properties of the extracted coffee oil. Therefore, the extraction solvent employed in this embodiment is hexane, preferably n-hexane (CH₃(CH₂)₄CH₃) is used. Coffee oil contains potentially useful compounds (e.g. fatty acids and caffeine) which exhibit antioxidant properties. The coffee oil recovered by extraction is suitable for use in the cosmetic or food industry. It should be understood that other organic solvents can be used as extraction solvents for the present disclosure, including heptane, tetrahydrofuran, acetone, ether, anhydrous ethanol, or any combination thereof.

The extraction of coffee oil is preferably carried out at a reflux temperature. The crushed coffee grounds particles are mixed with a sufficient amount of hexane (e.g. 5-20 ml hexane/g coffee grounds) and placed in a blender. The mixture is heated to the reflow temperature and stirred so that the coffee grounds are well mixed with hexane to allow the hexane to extract as much of the oil from the coffee grounds as possible to obtain the coffee oil product. The coffee oil collected by the extraction can be reused, for example, in applications for cosmetics or food industries.

After the coffee oil is extracted, the solid and liquid phases are filtered and separated, the hexane is removed from the coffee grounds, then the hexane is evaporated through a centrifugal process. In this embodiment, the residual hexane in the slurry of coffee grounds is evaporated using a centrifugal evaporator at about 90°C for about 2 hours, which essentially evaporates all of the residual hexane. This step is important not only to remove the extraction solvent and further evaporate the water, but also to remove organic material from the coffee grounds that may produce odors and decompose over time. Immediately after the hexane is completely removed, the temperature of the coffee grounds is raised from 90°C-110°C to 240°C-300°C at a heating rate of 5-10°C/min, maintaining this temperature for 2 to 4 hours, to undergo a high temperature carbonization that pyrolysis of the coffee grounds particles to form a porous structural body with a rough surface.

The high-temperature carbonization step is also a critical step in the pretreatment of coffee grounds, after which the moisture content of the coffee grounds is evaporated to less than or equal to 3%, and more importantly, the organic substances that produce odors and decompose over time in the coffee grounds are further removed to avoid affecting the properties of the final composite material. In addition, after the carbonization, the mechanical properties, tensile strength, flexural strength and heat resistance (able to resist temperatures of 600°C or higher) of the coffee grounds are improved, thus making them suitable for different processes that require high pressure and high temperature treatment, and have a wider range of applications.

Before the coffee oil is extracted, the surface morphology of the coffee grounds is relatively smooth. It has been found that the surface of coffee grounds becomes rough and porous after pretreatment according to the present disclosure, and this change in surface morphology also indicates that the coffee oil originally present in the coffee grounds is successfully extracted. Agitation during the pretreatment process causes more collisions between coffee grounds particles, and these collisions can refine the particle size and allow for better dispersion of the coffee grounds in the plastic matrix.

The pretreated carbonized coffee grounds mentioned above, polypropylene and binder are mixed in a certain ratio and stirred. Then the mixture is sent into the blending machine for blending, and then extruding and pelletizing the blended material to get the plastic composites. According to the present disclosure, the carbonized coffee grounds, polypropylene and binder material can be mixed in the following proportions: 20-40 wt.% of coffee grounds, 50-78% of polypropylene, and 2-10 wt.% of binder. The binder can be an organic binder or an inorganic binder such as a silicate, as long as it helps to combine the hydrophilic coffee grounds with the hydrophobic plastics. Furthermore, the addition of a binder can maintain a better mechanical tensile strength. Plastics can be selected appropriately for the specific application and purpose desired, including ABS plastics, nylon, and etc.

In the plastic composites of the present disclosure, the amount of coffee grounds added is significantly increased, the dispersion of coffee ground particles in the polypropylene matrix is more uniform, and with better interfacial interactions with each other and better resistance to bending load deformation, thus a stronger composite with improved mechanical properties, tensile properties and thermal stability is produced. These improved properties are attributed to the complete extraction of coffee oil from the coffee grounds.

The present disclosure provides plastic composites containing coffee grounds and its preparation method, which has the following advantages compared with the conventional art: the present disclosure can increase the content of coffee grounds in the plastic composites, improve the availability of coffee grounds and solve the problem of recycling of waste coffee grounds; the plastic composites containing coffee grounds prepared in accordance with the method of the present disclosure has improved mechanical properties, tensile properties and thermal stability, and has gained wider application.

Thus, another aspect of the present disclosure relates to the use of the plastic composites containing coffee grounds of the present disclosure in molded tableware, straws and food containers.

The above description of exemplary embodiment has explained in detail the plastic composites and their preparation method of the present disclosure. It should be understood that the scope of the present disclosure is not limited to the above exemplary embodiment, but is defined by the accompanying claims. Various modifications can be made to the exemplary embodiment without departing from the objectives and spirit of the present invention, and such modifications are still within the scope of the present disclosure.

## Claims

1. A method for preparing plastic composites containing a plant fiber, the method comprising:
(a) providing a first raw material containing the plant fiber and a second raw material containing plastics;
(b) pretreating of the first raw material comprising:
(b1) washing the first raw material with water to remove contaminants and water-soluble compounds,
(b2) drying the washed first raw material, and
(b3) extracting an oily substance from the dried first raw material by solvent extraction, obtaining the oily substances extracted first raw material, and
(b4) removing the solvent from the extracted first raw material;
(c) heating the pretreated first raw material for carbonization; and
(d) mixing the carbonized first raw material with the second raw material to form a composite material.

2. The preparation method according to claim 1, wherein the first raw material containing the plant fiber is selected from coffee grounds or agricultural wastes.

3. The preparation method according to claim 1, wherein the first raw material contains coffee grounds, and the pretreating of the first raw material is as follows:
washing the first raw material containing coffee grounds with deionized water at room temperature to remove the contaminants and the water-soluble compounds;
drying the washed first raw material until the water content of the coffee grounds therein is not more than 20 wt.%, and preferably not more than 10 wt.%;
extracting coffee oil from the dried coffee grounds using an organic extraction solvent; and
removing the extraction solvent from the coffee grounds.

4. The preparation method according to claim 3, wherein the extraction solvent is selected from hexane, heptane, tetrahydrofuran, acetone, ethyl ether or anhydrous ethanol, with the hexane as a preferred choice.

5. The preparation method according to claim 3, wherein the step of extracting the coffee oil is carried out at reflux temperature.

6. The preparation method according to claim 3, wherein the dried coffee grounds are milled or ground before performing the step of extracting the coffee oil, and wherein a particle size of the obtained coffee grounds is in the order of microns, preferably not greater than 250 microns, more preferably in the range of 100 microns to 150 microns.

7. The preparation method according to claim 3, wherein the step of removing the extraction solvent from the coffee grounds comprises separating the solid and liquid phases by filtration, and removing residual moisture in the coffee grounds and the extraction solvent at 90°C to 110°C through rotary evaporation or centrifugation, resulting in the coffee grounds that are substantially free of extraction solvent and have a water content of no more than 3 wt.%.

8. The preparation method according to claim 7, wherein the coffee grounds, which do not contain the extraction solvent and have the water content of no more than 3 wt.%, are heated at a heating rate of 5-10°C/min, preferably at 5°C/min, from 90°C to 110°C to a temperature range of 200°C to 320°C, preferably within the range of 240°C to 300°C, and maintained at the temperature range for 2 to 4 hours for a carbonization of the coffee grounds.

9. The preparation method according to any one of claims 3-7, wherein the first raw material containing the coffee grounds and the second raw material are mixed in a weight ratio ranging from 1:2 to 1:20, preferably from 1:2 to 1:5, and more preferably from 1:2.5 to 1:5.

10. The preparation method according to claim 9, wherein the first raw material containing the coffee grounds is the coffee grounds alone or a mixture of the coffee grounds and other plant fibers, preferably with the other plant fibers as coffee husks or wood fibers.

11. The preparation method according to any one of claims 1-8, wherein an additive is added in the step (d) to improve physical and/or chemical properties of the composite material.

12. The preparation method according to claim 11, wherein the additive is a binder, which functions to increase the viscosity when mixing the first raw material with the second raw material.

13. The preparation method according to any one of claims 1-8, wherein the plastics are selected from a group consisting of polypropylene, ABS plastic, nylon, and any combination thereof.

14. Plastic composites prepared by the preparation method according to any one of claims 1-13, wherein the plastic composites comprise 5-50 wt.% of plant fiber and 50-95% of plastics, and wherein the plant fiber has a particle size in the order of microns, preferably not greater than 250 microns, more preferably in the range of 100 microns to 150 microns.

15. The plastic composites according to claim 14, wherein the plant fiber is coffee grounds or agricultural wastes.

16. The plastic composites according to claim 15, wherein the plastic composites comprise a weight percentage of 5-50 wt.%, preferably 20-40 wt.% of raw materials containing coffee grounds, and 50-95 wt.%, preferably 60-80 wt.% of plastics, and wherein the coffee grounds have a particle size in a range of 100 microns to 150 microns.

17. The plastic composites according to claim 16, wherein the plastic is selected from a group consisting of: polypropylene, ABS plastic, nylon and any combination thereof.

18. The plastic composites according to claim 16 or 17, wherein the plastic composites are further supplemented with a binder, and wherein the binder accounts for 2-10 wt.%, the raw material containing coffee grounds accounts for 5-40 wt.%, and the plastics account for 50-93%.

19. The plastic composites according to claim 18, wherein the raw material containing coffee grounds is coffee grounds alone or a mixture of coffee grounds and other plant fibers, preferably with the other plant fibers as coffee husks or wood fibers.

20. The use of plastic composites according to any one of claims 14-19 in making food-grade utensils.

21. The use according to claim 20, wherein the food-grade utensils include tableware, straws and food containers.
